# EUROPEAN PATENT SPECIFICATION

(11) **EP 2 703 223 B1**
(45) Date of publication and mention of the grant of the patent: **26.04.2017**
(21) Application number: 12191356.0
(22) Date of filing: 06.11.2012
(51) Int. Cl.: B60R 3/02

(54) **Electric step apparatus**
Elektrische Trittstufenvorrichtung
Appareil de marchepied électrique

(30) Priority: 27.08.2012 KR 20120093865
(43) Date of publication of application: 05.03.2014
(73) Proprietor: Hwangsung Industry Co., Ltd., Jeonbuk (KR)
(72) Inventor: Shin, Hu Sang, Gunsan-si Jeonbuk (KR)
(74) Representative: Röggla, Harald

(56) References cited:
- EP-A1- 2 390 142
- JP-A- 2003 127 776
- US-A1- 2006 245 883

## Description

### Technical Field:

This disclosure relates to an electric step apparatus, and more particularly, to an electric step apparatus with an improved structure so that children, the old, the infirm, and the disabled may get on or off a vehicle easily and safely, by being equipped with a step which may be drawn outwards by a driving force of a motor between a foot board of a vehicle and the ground for passengers to safely get on or off the vehicle.

### Background Art:

Generally, a sedan has a small ground clearance, and so a passenger may easily get on or off the sedan. However, a van or SUV has a relatively great ground clearance, and so children, the old and the infirm may not easily get on or off the vehicle, which may lead to various accidents.

Accordingly, in a vehicle having a relatively great ground clearance in comparison to sedans, in the conventional art, a step extending along a vehicle body at an intermediate height between a side sill of the vehicle and the ground is separately provided. The existing step is fixedly installed to the vehicle body and so always exposed to the outside, which deteriorates the appearance of the vehicle.

In addition, the conventional fixed step is useful only when a passenger gets on or off the vehicle, and while the vehicle is running, the conventional step is useless and rather becomes an obstacle to the running vehicle since it increases the width of the vehicle body.

In other words, the conventional fixed step may cause contact or collision with various obstacles or pedestrians while the vehicle is running.

Therefore, a drawing-type, step is demanded instead of such a fixed step, and Korean Unexamined Patent Publication No. 10-2011-0111869 discloses such a drawing-type step. As shown in Fig. 1, a mounting bracket 10 is horizontally installed along a side sill of a vehicle body, and a foot board 20 is installed to the mounting bracket 10 to be pivotable by means of a hinge pin. In other words, the hinge pin is installed at a hinge point between the mounting bracket 10 and the foot board 20 so that the foot board 20 may pivot in a folding or unfolding direction within a suitable angle with respect to the mounting bracket 10.

The hinge point between the mounting bracket 10 and the foot board 20 is provided as a portion passing between first hinge units 12 formed at both ends of the mounting bracket 10 and second hinge units 22 formed at both ends of the foot board 20, and the hinge pin is assembled to the corresponding portion.

In other words, the first hinge unit 12 is protruded to integrally protrude at both ends of the mounting bracket 10 in order to form the hinge point, and the second hinge unit 22 is provided to integrally protrude at both ends of the foot board 20 in order to make hinge-coupling with the first hinge unit 12.

In addition, the mounting bracket 10 integrally includes a mounting portion 14 surface-attached to the bottom surface of the side sill, and a plurality of through holes 16 are formed in the mounting portion 14 for screw-coupling with the side sill by using a plurality of bolts.

The foot board 20 includes anti-sliding plates 24 for the front surface in the folding direction and the front surface in the unfolding direction, respectively, for the safe of passengers who get on or off the vehicle. The anti-sliding plates 24 have curved portions 24a which are rounded and formed integrally at an edge portion between the front surface in the folding direction and the front surface in the unfolding direction, in order to prevent any damage caused by collision.

However, in the above technique, the foot board is pivoted on the hinge pin to fold or unfold and has weak rigidity against weight, which may cause accidents when the weight of a passenger is transferred to the foot board.

In addition, the foot board is exposed outwards before being pivoted, which may deteriorates the appearance of the vehicle.

Document JP 2003 127776 A discloses an electrical step apparatus with control means to sense a door opening/closing operation of the vehicle and to operate a step body in linkage with the door opening/closing operation of the vehicle. The disclosed electrical step apparatus furthermore comprises sliding means coupled to both sides of the step body.

### Technical Problem:

This disclosure is directed to providing an electric step apparatus with an improved structure.

In addition, this disclosure is directed to providing an electric step apparatus which has a simple configuration to be operated by a driving force of a motor and is also designed to have sufficient rigidity against weight even though the weight of a passenger is transferred thereto.

### Technical Solution:

In one general aspect, there is provided an electric step apparatus, which includes: fixed frames mounted to a bottom of a vehicle and composed of a front frame having an entry slot at a front surface thereof and side frames oppositely disposed at both right and left sides of the front frame; a step body slidably coupled to the side frames by means of a sliding means to move in or out through the entry slot; a transportation means connected to the step body to operate in linkage with the step body and converting a rotation driving force of a driving motor into a linear movement to give a forward/rearward moving power to the step body; and a control means for sensing a door opening/closing operation of the vehicle and controlling the driving motor so that the step body operates in linkage with the door opening/closing operation of the vehicle.

The sliding means furthermore include: rail units formed at sides of the side frames opposite to each other; and a sliding bar coupled to both sides of the step body, respectively, and slidably inserted between the rail units.

The sliding bar furthermore has a groove portion formed in a lower surface thereof to reduce a contact area with the rail unit.

The transportation means may include: first and second gear units engaged with gear teeth of a driving gear of the driving motor to rotate in linkage with the driving gear when the driving motor is in operation; and a link member respectively connected to the first and second gear units to operate in linkage with to the first and second gear units and pin-coupled to the step body to convert a rotating force of the first and second gear units into a linear movement so as to give a forward/rearward moving power to the step body.

### Advantageous Effects:

First, since the step body is located in a fixed frame coupled to the bottom of the vehicle at ordinary time and is drawn in the horizontal direction from a side of the vehicle in linkage with a door when the door is opened, the electric step apparatus of the present disclosure may help passengers who get on the vehicle without disturbing the vehicle which is running and deteriorating the appearance of the vehicle.

Second, since sliding bars respectively coupled to both sides of the step body are slidably inserted into the rail units formed at one side of the side frames, the electric step apparatus of the present disclosure may have sufficient rigidity against weight even though the weight of a passenger is transferred thereto.

Third, since a groove portion is formed at the lower surface of the sliding bar, it is possible to reduce a contact area between the rail unit and the sliding bar and thus prevent a freezing phenomenon in the winter time.

Fourth, since the electric step apparatus of the present disclosure includes a link member which gives a forward/rearward moving power to the step body by converting the rotating force of the first and second gear units into a linear movement, the response of the step body serving as a foot board may be improved with a simple configuration where the step body may move forward or rearward by a rotation driving force of a motor.

Fifth, in the case an impact from the outside is transferred when the step body protrudes forwards, the electric step apparatus of the present disclosure may move the step body rearwards or generate an alarm to the outside, thereby preventing an accident of a passenger and a damage of the vehicle.

### Description of Drawings:

The above and other aspects, features and advantages of the disclosed exemplary embodiments will be more apparent from the following detailed description taken in conjunction with the accompanying drawings in which:
Fig. 1 is a perspective view showing a conventional electric step apparatus;
Fig 2 is a diagram showing an electric step apparatus according to the present disclosure;
Fig. 3 is a perspective view at another angle where the upper cover of Fig. 2 is omitted,
Fig. 4 is a plane view showing a transportation means according to the present disclosure;
Fig. 5 is a perspective view showing a sliding means according to the present disclosure;
Fig. 6 is a perspective view showing a sliding bar according to the present disclosure;
Fig. 7 is a perspective view showing a step body according to the present disclosure;
Fig. 8 is a block diagram schematically showing a control means according to the present disclosure; and
Figs. 9a and 9b are diagrams showing the states of a transportation means according to the present disclosure before and after its operation.

**Detailed Description of Main Elements**

| | | | |
|---|---|---|---|
| 110: | front frame | 115: | entry hole |
| 120: | side frame | 122: | rail unit |
| 125: | moving bracket | 130: | upper cover |
| 210: | step body | 212: | non-slip protrusion |
| 215: | reinforcement rib | 220: | sliding bar |
| 222: | groove portion | 310A, 310B: | first and second gear units |
| 312: | gear teeth | 320: | rotation pin |
| 330: | link member | 332: | first link member |
| 334: | second link member | 340: | connection pin |
| 400: | driving motor | 410: | driving gear |
| 500: | controller | 510: | door sensor |
| 520: | step sensor | 540: | motor driving unit |
| 550: | buzzer | | |

### Best Mode:

Exemplary embodiments now will be described more fully hereinafter with reference to the accompanying drawings, in which exemplary embodiments are shown.

The present disclosure provides a step body which is located between a foot board of a vehicle and the ground and may move forwards/rearwards by a driving force of a driving motor to be drawn outwards in linkage of an opening/closing operation of a door so that children, the old, the infirm, and the disabled may get on or off the vehicle easily and safely.

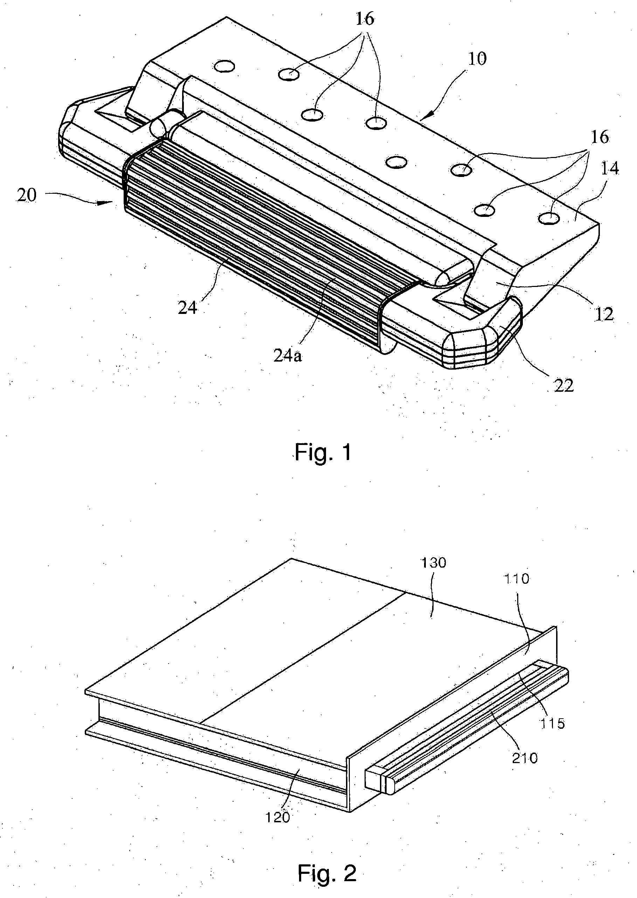

Referring to Figs. 2 to 9, the electric step apparatus according to the present disclosure includes fixed frames 110, 120, 130 mounted to the bottom of a vehicle and having an entry hole 115, a step body 210 slidably coupled to the side portions of the fixed frames 110, 120, 130 so as to move in or out through the entry hole 115, a transportation means connected to the step body 210 to operate in linkage with the step body 210 and converting a rotation driving force of a driving motor 400 into a linear movement to give a forward/rearward moving power to the step body 210, and a control means for sensing a door opening/closing operation of the vehicle and controlling the driving motor 400 so that the step body 210 operates in linkage with the door opening/closing operation of the vehicle.

In more detail, the fixed frames 110, 120, 130 are composed of a front frame 110 having the entry hole 115 performed with a slit shape, side frames 120 oppositely disposed at both right and left sides of the front frame 110, and an upper cover 130 connecting the right and left side frames 120 and coupled to the bottom of the vehicle.

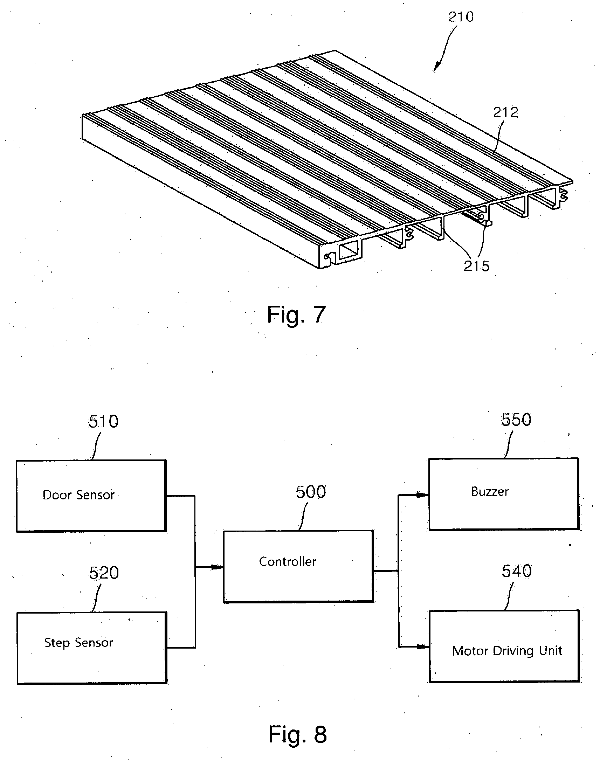

Referring to Fig. 7, the step body 210 has a non-slip protrusion 212 formed at the upper surface thereof to prevent slipping and a plurality of reinforcement ribs 215 formed at the lower surface thereof for strength reinforcement.

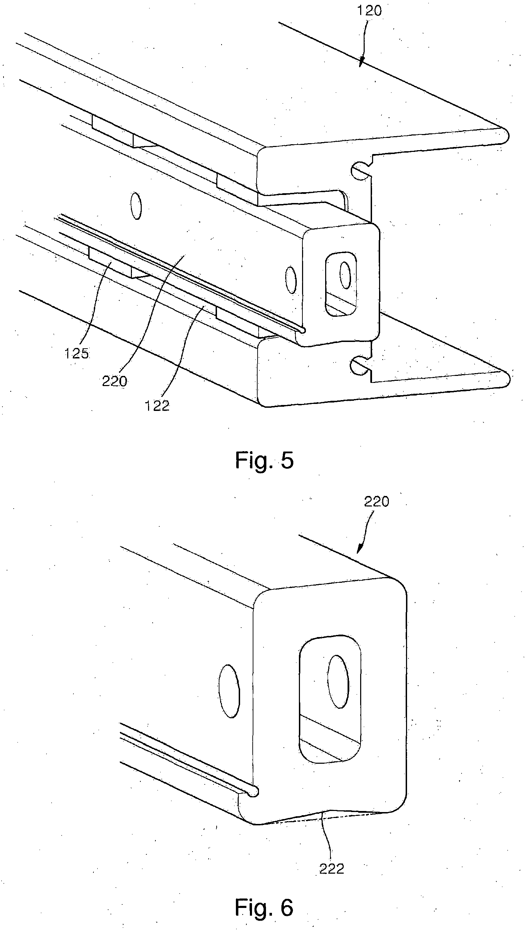

Referring to Fig. 5, the sliding means includes rail units 122 formed at sides of the side frames 120 opposite to each other, and a sliding bar 220 respectively coupled to both sides of the step body 210 and slidably inserted between the rail units 122.

The sliding bar 220 is coupled to right and left side edges of the step body 210 by using screws and bolts.

Reference symbol "125" represents a moving bracket 125 interposed between the rail unit 122 and the sliding bar 220 and having a bearing function to facilitate a sliding movement of the sliding bar 220.

In addition, as shown in Fig. 6, the sliding bar 220 has a groove portion 222 formed at the lower surface thereof to reduce a contact area with the rail unit 122.

The groove portion 222 is directed to minimizing a contact with the rail unit 122 in order to prevent water from being introduced to the bottom of the rail unit 122 and frozen in the winter time, and the groove portion 222 is formed to be concave upwards at the center of the lower surface of the sliding bar 220.

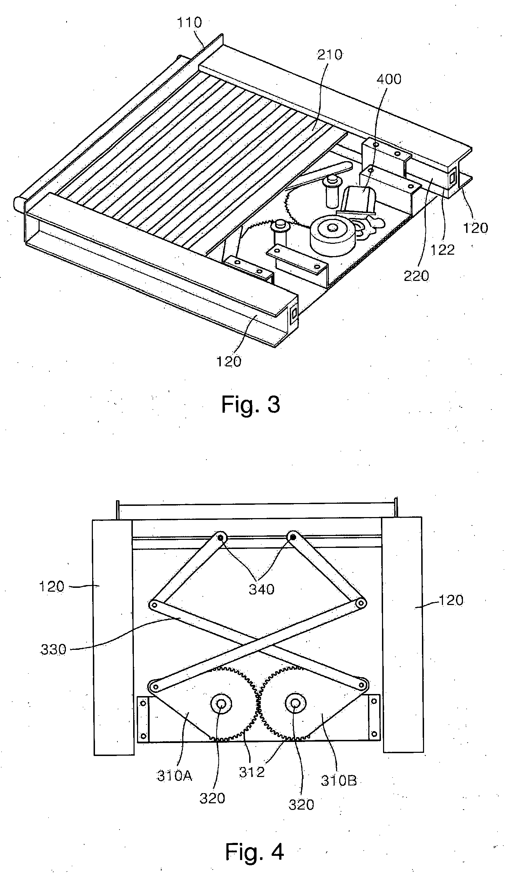

Referring to Fig. 4, the transportation means includes first and second gear units 310A, 310B engaged with gear teeth of a driving gear 410 of the driving motor 400 to rotate in linkage with the driving gear 410 when the driving motor 400 is in operation, and a link member 330 respectively connected to the first and second gear units 310A, 310B to operate in linkage with to the first and second gear units 310A, 310B and pin-coupled to the step body 210 to convert a rotating force of the first and second gear units 310A, 310B into a linear movement so as to give a forward/rearward moving power to the step body 210.

The first and second gear units 310A, 310B are disposed between the side frames 120 and coupled to rotate based on the rotation pin 320, respectively, and the first and second gear units 310A, 310B respectively have gear teeth 312 formed at side rims thereof so that the driving gear 410 are engaged with the gear teeth.

The link member 330 includes a first link member 332 respectively coupled to the first and second gear units 310A, 310B to operate in linkage with the first and second gear units 310A, 310B, and a second link member 334 linked to the first link member 332 and having a connection pin 340 formed at an end thereof and pin-coupled to the step body 210.

Referring to Fig. 8, the control means includes a door sensor 510 for sensing and outputting an open/close state of the door of the vehicle, a step sensor 520 for sensing and outputting an external pressure transferred to the step body 210, and a controller 500 for receiving signals output from the door sensor 510 and the step sensor 520 and outputting a control signal to a motor driving unit 540 and a buzzer 550 based thereon.

In more detail, the motor driving unit 540 controls operations of the driving motor 400 which may rotate in clockwise and counterclockwise directions and has a function of controlling the clockwise/counterclockwise rotating operation of the driving motor 400 according to a control signal of the controller 500.

After the step body 210 is operated to protrude forwards, the step sensor 520 detects an impact over a suitable pressure transferred from the outside, and outputs it to the controller 500 so that the step body 210 is operated to move rearwards, or operates the buzzer 550 to prevent an accident of a passenger and a damage of the vehicle.

In addition, when the step body 210 moves forwards or rearwards, the buzzer 550 generates an alarm or functions as a display to emit a light in order to notify the movement of the step body 210, and for this, the buzzer 550 gives a warning light or an alarm.

The electric step apparatus according to the present disclosure configured as above operates as follows.

In the electric step apparatus of the present disclosure, since the fixed frames 110, 120, 130 are mounted to the bottom of a vehicle, the entry hole 115 of the front frame 110 is located between the foot board of the vehicle and the ground.

After that, if the driving motor 400 is operated, the driving gear 410 of the driving motor 400 rotates in the clockwise direction, and the first and second gear units 310A, 310B having gear teeth engaged with the driving gear 410 operate in linkage to rotate based on the rotation pin 320.

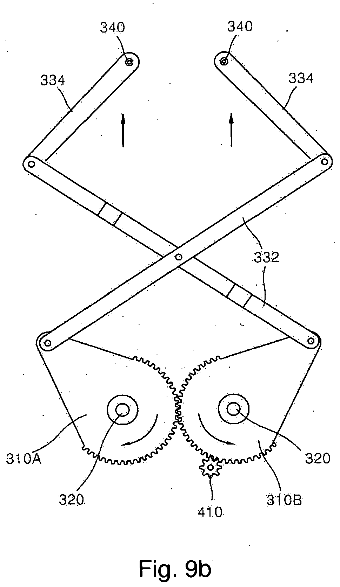

If the first and second gear units 310A, 310B rotate, as shown in Fig. 9b, the first and second link members 332, 334 linked to the first and second gear units 310A, 310B make link movement, and accordingly the step body 210 pin-coupled to the connection pin 340 moves forwards out of the entry hole 115.

During the link movement, the end of the link member 330 moves forwards in the horizontal direction so that the step body 210 moves forwards in the horizontal direction out of the vehicle.

At this time, the sliding bar 220 coupled to the side rim of the step body 210 slides between the rail units 122 of the side frames 120 due to the forward moving power transferred to the step body 210.

By doing so, the step body 210 is drawn out of the entry hole 115 and is disposed between the ground and the foot board of the vehicle, thereby helping children, the old, the infirm, and the disabled to get on the vehicle easily.

Meanwhile, when the door is closed, the driving motor 400 is operated in the counterclockwise direction so that the step body 210 moves rearwards.

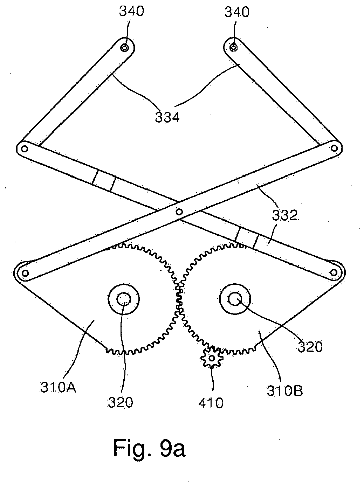

At this time, the first and second gear units 310A, 310B rotate in the counterclockwise direction by the driving gear 410 as shown in Fig. 9a, and accordingly the first and second link members 332, 334 are shrunken to give a rearward moving power to the step body 210.

By doing so, the step body 210 moves rearwards by the first and second link members 332, 334 to be located among the fixed frames 110, 120, 130.

The operations of the step body 210 described above are controlled to be in linkage with the opening/closing operation of the door by means of the control means as described above.

In more detail, when the door is opened, the step body 210 is drawn out of the entry hole 115, and when the door is closed, the step body 210 is inserted among the fixed frames 110, 120, 130 so as not to disturb the vehicle which is running and deteriorate the appearance of the vehicle.

Therefore, in the electric step apparatus of the present disclosure, at ordinary time, the step body 210 is located among the fixed frames 110, 120, 130 coupled to the bottom of the vehicle, and in use, the step body 210 is drawn to protrude in the horizontal direction from the side of the vehicle in linage with the opening operation of the door to help passengers to easily get on the vehicle.

While the exemplary embodiments have been shown and described, it will be understood by those skilled in the art that various changes in form and details may be made thereto without departing from the scope of this disclosure as defined by the appended claims.

## Claims

1. An electric step apparatus, comprising:
fixed frames (110,120,130) built to be mounted to a bottom of a vehicle and composed of a front frame (110) having an entry hole (115) at a front surface thereof and side frames (120) oppositely disposed at both right and left sides of the front frame (110);
a step body (210) slidably coupled to the side frames (120) by means of a sliding means to move in or out through the entry hole (115);
a transportation means connected to the step body (210) to operate in linkage with the step body (210) and converting a rotation driving force of a driving motor (400) into a linear movement to give a forward/rearward moving power to the step body (210); and
a control means for sensing a door opening/closing operation of the vehicle and controlling the driving motor (400) so that the step body (210) operates in linkage with the door opening/closing operation of the vehicle,
wherein the sliding means includes:
rail units (122) formed at sides of the side frames (120) opposite to each other; and
a sliding bar (220) coupled to both sides of the step body (210), respectively, and slidably inserted between the rail units (122), **characterized in, that**
the sliding bar (220) has a groove portion (222) formed in a lower surface thereof to reduce a contact area with the rail unit (122).

2. The electric step apparatus according to claim 1, wherein the transportation means includes:
first and second gear units (310A, 310B) engaged with gear teeth of a driving gear (410) of the driving motor (400) to rotate in linkage with the driving gear (410) when the driving motor (400) is in operation; and
a link member (330) respectively connected to the first and second gear units (310A, 310B) to operate in linkage with to the first and second gear units (310A, 310B) and pin-coupled to the step body (210) to convert a rotating force of the first and second gear units (310A, 310B) into a linear movement so as to give a forward/rearward moving power to the step body (210).

3. The electric step apparatus according to claim 2, wherein the link member (330) has a connection pin (340) provided at an end thereof to vertically protrude so that the link member (330) is detachably connected to the step body (210).

4. The electric step apparatus according to claim 1, wherein the control means includes:
a door sensor (510) for sensing and outputting an open/close state of the door of the vehicle;
a step sensor (520) for sensing and outputting an external pressure transferred to the step body (210); and
a controller (500) for receiving signals output from the door sensor (510) and the step sensor (520) and outputting a control signal to a motor driving unit (540) and a buzzer (550) based thereon.

## Patentansprüche

1. Elektrische Schrittvorrichtung, umfassend:
feste Rahmen (110, 120, 130), die zur Befestigung am Boden eines Fahrzeugs gebaut und aus einem vorderen Rahmen (110), der ein Eintrittsloch (115) an seiner Stirnfläche aufweist, und Seitenrahmen (120), die sowohl an der rechten als auch an der linken Seite des vorderen Rahmens (110) gegenüberliegend angeordnet sind, zusammengesetzt sind;
einen Schrittkörper (210), der mittels einer Schiebeeinrichtung verschiebbar an die Seitenrahmen (120) gekoppelt ist, um sich durch das Eintrittsloch (115) hinein oder hinaus zu bewegen;
eine Transporteinrichtung, die mit dem Schrittkörper (210) verbunden ist, um in Verbindung mit dem Schrittkörper (210) zu arbeiten, und eine Drehantriebskraft eines Antriebsmotors (400) in eine lineare Bewegung umwandelt, um dem Schrittkörper (210) eine vorwärts/rückwärts treibende Kraft zu verleihen; und
eine Steuereinrichtung zum Wahrnehmen eines Türöffnungs-/Schließvorgangs des Fahrzeugs und zum Steuern des Antriebsmotors (400), so dass der Schrittkörper (210) in Verbindung mit dem Türöffnungs-/Schließvorgang des Fahrzeugs arbeitet,
wobei die Schiebeeinrichtung Folgendes umfasst:
Schieneneinheiten (122), die an den Seiten der Seitenrahmen (120) einander gegenüberliegend ausgebildet sind; und
eine Gleitstange (220), die jeweils an beide Seiten des Schrittkörpers (210) gekoppelt und zwischen den Schieneneinheiten (122) verschiebbar eingesetzt ist, **dadurch gekennzeichnet, dass**
die Gleitstange (220) einen Kerbenabschnitt (222) hat, der in ihrer unteren Fläche gebildet ist, um eine Berührungsfläche mit der Schieneneinheit (122) zu verringern.

2. Elektrische Schrittvorrichtung gemäß Anspruch 1, wobei die Transporteinrichtung Folgendes umfasst:
eine erste und eine zweite Zahnradeinheit (310A, 310B), die mit Zahnradzähnen eines treibenden Zahnrads (410) des Antriebsmotors (400) in Eingriff stehen, um in Verbindung mit dem treibenden Zahnrad (410) zu rotieren, wenn der Antriebsmotor (400) läuft; und
ein Verbindungsglied (330), das mit der ersten bzw. der zweiten Zahnradeinheit (310A, 310B) verbunden ist, um in Verbindung mit der ersten und der zweiten Zahnradeinheit (310A, 310B) zu arbeiten, und durch Bolzenkupplung mit dem Schrittkörper (210) verbunden ist, um eine Drehkraft der ersten und der zweiten Zahnradeinheit (310A, 310B) in eine lineare Bewegung umzuwandeln, um dem Schrittkörper (210) eine vorwärts/rückwärts treibende Kraft zu verleihen.

3. Elektrische Schrittvorrichtung gemäß Anspruch 2, wobei das Verbindungsglied (330) einen Verbindungsstift (340) aufweist, der an seinem Ende vorgesehen ist, um vertikal herauszuragen, so dass das Verbindungsglied (330) mit dem Schrittkörper (210) lösbar verbunden ist.

4. Elektrische Schrittvorrichtung gemäß Anspruch 1, wobei die Steuereinrichtung Folgendes umfasst:
einen Türsensor (510) zum Wahrnehmen und Ausgeben eines offenen/geschlossenen Zustands der Tür des Fahrzeugs;
einen Schrittsensor (520) zum Wahrnehmen und Ausgeben eines auf den Schrittkörper (210) übertragenen Außendrucks; und
einen Regler (500) zum Empfangen von Signalen, die von dem Türsensor (510) und dem Schrittsensor (520) ausgegeben wurden, und zum Ausgeben eines Steuersignals an eine Motorantriebseinheit (540) und einen darauf basierenden Summer (550).

## Revendications

1. Appareil de marchepied électrique comprenant :
des bâtis fixes (110, 120, 130) construits pour être montés sur un fond d'un véhicule et composés d'un bâti avant (110) ayant un trou d'entrée (115) au niveau de sa surface avant et des bâtis latéraux (120) disposés à l'opposé des deux côtés droit et gauche du bâti avant (110) ;
un corps de marchepied (210) couplé de manière coulissante aux bâtis latéraux (120) au moyen d'un moyen de coulissement pour entrer et sortir du trou d'entrée (115) ;
un moyen de transport raccordé au corps de marchepied (210) pour fonctionner en liaison avec le corps de marchepied (210) et convertissant une force d'entraînement de rotation d'un moteur d'entraînement (400) en un mouvement linéaire pour donner une puissance de déplacement vers l'avant/vers l'arrière au corps de marchepied (210) ; et
un moyen de commande pour détecter une opération d'ouverture/fermeture de porte du véhicule et commander le moteur d'entraînement (400) de sorte que le corps de marchepied (210) fonctionne en liaison avec l'opération d'ouverture/fermeture de porte du véhicule,
dans lequel le moyen de coulissement comprend :
des unités de rail (122) formées sur les côtés des bâtis latéraux (120) opposées entre elles ; et
une barre coulissante (220) couplée aux deux côtés du corps de marchepied (210), respectivement, et insérée de manière coulissante entre les unités de rail (122), **caractérisé en ce que** :
la barre coulissante (220) a une partie de rainure (222) formée dans sa surface inférieure pour réduire une zone de contact avec l'unité de rail (122).

2. Appareil de marchepied électrique selon la revendication 1, dans lequel le moyen de transport comprend :
des première et seconde unités d'engrenage (310A, 310B) mises en prise avec des dents d'engrenage d'un engrenage d'entraînement (410) du moteur d'entraînement (400) pour tourner en liaison avec l'engrenage d'entraînement (410) lorsque le moteur d'entraînement (400) est en fonctionnement ; et
un élément de liaison (330) respectivement raccordé aux première et seconde unités d'engrenage (310A, 310B) pour fonctionner en liaison avec les première et seconde unités d'engrenage (310A, 310B) et couplé par broche au corps de marchepied (210) pour convertir une force de rotation des première et seconde unités d'engrenage (310A, 310B) en un mouvement linéaire afin de donner une puissance de déplacement vers l'avant/vers l'arrière au corps de marchepied (210).

3. Appareil de marchepied électrique selon la revendication 2, dans lequel l'élément de liaison (330) a une broche de raccordement (340) prévue au niveau de son extrémité pour faire verticalement saillie de sorte que l'élément de liaison (330) est raccordé de manière détachable au corps de marchepied (210).

4. Appareil de marchepied électrique selon la revendication 1, dans lequel le moyen de commande comprend :
un capteur de porte (510) pour détecter et produire un état ouvert/fermé de la porte du véhicule ;
un capteur de marchepied (520) pour détecter et produire une pression externe transférée au corps de marchepied (210) ; et
un organe de commande (500) pour recevoir des signaux produits par le capteur de porte (510) et le capteur de marchepied (520) et transmettre un signal de commande à une unité d'entraînement de moteur (540) et un signal sonore (550) en fonction de ce dernier.
